# EUROPÄISCHE PATENTSCHRIFT

(11) **EP 1 976 680 B1**
(45) Veröffentlichungstag und Bekanntmachung des Hinweises auf die Patenterteilung: **27.03.2013**
(21) Anmeldenummer: 07819510.4
(22) Anmeldetag: 31.10.2007
(51) Int. Cl.: B29C 67/00, B22F 3/105

(54) **VORRICHTUNG UND VERFAHREN ZUM HERSTELLEN EINES DREIDIMENSIONALEN OBJEKTES MITTELS EINES BESCHICHTERS FÜR PULVERFÖRMIGES AUFBAUMATERIAL**
APPARATUS AND METHOD FOR THE PRODUCTION OF A THREE-DIMENSIONAL OBJECT BY MEANS OF A COATING DEVICE FOR POWDERED STRUCTURAL MATERIAL
DISPOSITIF ET PROCÉDÉ POUR PRODUIRE UN OBJET TRIDIMENSIONNEL AU MOYEN D'UN SYSTÈME D'APPLICATION DE COUCHES POUR MATÉRIAU DE CONSTRUCTION PULVÉRULENT

(30) Priorität: 10.11.2006 DE 102006053121
(43) Veröffentlichungstag der Anmeldung: 08.10.2008
(73) Patentinhaber: EOS GmbH Electro Optical Systems, 82152 Krailling (DE)
(72) Erfinder: HEIN, Peter, 82067 Schäftlarn / Zell (DE); MÜLLER, Frank, 82256 Fürstenfeldbruck (DE)
(74) Vertreter: Hofer, Dorothea
(86) Internationale Anmeldenummer: PCT/EP2007/009479
(87) Internationale Veröffentlichungsnummer: WO 2008/055615

(56) Entgegenhaltungen:
- DE-A1- 4 400 523
- DE-A1- 10 105 504
- DE-A1-102005 016 940
- DE-A1-102005 022 308
- DE-C1- 19 813 742

## Beschreibung

Die vorliegende Erfindung bezieht sich auf einen Beschichter zum Auftragen von pulverförmigen Schichten nach dem Oberbegriff des Anspruchs 1 sowie auf eine Vorrichtung und ein Verfahren zur Herstellung eines dreidimensionalen Objektes.

Die ältere Anmeldung EP 06 742 742, die als Stand der Technik gemäß Artikel 54(3) EPÜ gilt, beschreibt eine Vorrichtung und ein Verfahren zum Herstellen eines dreidimensionalen Objekts mit einem beheizten Beschichter für pulverförmiges Aufbaumaterial. Der Beschichter ist mit einer steifen Klinge ausgebildet, die starr mit dem Beschichter verbunden ist. In einer besonderen Ausführungsform sind zwei Klingen vorgesehen, in welche jeweils eine Fluidisierungseinrichtung integriert ist. Zum Einlassen von Stickstoffgas ist dabei eine Zuleitung mit einem Ventil vorgesehen.

Es sind Verfahren zum Herstellen dreidimensionaler Objekte wie z.B. das selektive Lasersintern oder das 3D-Printing bekannt. Dabei wird ein dreidimensionales Objekt schichtweise durch Verfestigen eines pulverförmigen Materials ausgebildet. Beim selektiven Lasersintern erfolgt die Verfestigung mittels eines auf die Pulverschicht auftreffenden Laserstrahls, wobei das Verfahren auch mittels anderer ionisierender Strahlen durchgeführt werden kann. Beim 3D-Printing wird ein Binder bzw. Klebstoff an den zu verfestigenden Stellen der Pulverschicht aufgebracht.

Bei den oben genannten Verfahren ist es von Nachteil, wenn bereits vor dem Verfestigungsvorgang eine Verklumpung des Pulvers stattfindet. Diese kann bereits in einem Aufbewahrungsbehälter aufgrund elektrostatischer Anziehungskräfte zwischen den Pulverteilchen auftreten. Ein Verklumpungsvorgang kann desweiteren durch die Umweltbedingungen beim Transport des Pulvers vom Vorratsbehälter zum Bauraum gefördert werden, z.B. aufgrund der erhöhten Temperaturen im Bauraum.

In der DE 101 05 504 A1 werden eine Vorrichtung und ein Verfahren beschrieben, bei denen Pulver in einem Vorratsbehälter dadurch fluidisiert wird, daß Luft von unten durch das Pulver in dem Vorratsbehälter geblasen wird. Hierzu weist der Vorratsbehälter einen doppelten Boden auf, dessen oberer Teil mit Löchern versehen ist, durch die das Gas in den Aufbewahrungsraum des Pulvers gelangt.

Das Verfahren der DE 101 05 504 A1 kann zwar ein Verklumpen des Pulvers in dem Vorratsbehälter verhindern, es ist jedoch immer noch ein Verklumpen nach dem Verlassen des Vorratsbehälters und vor dem Auftrag des Pulvers im Bauraum möglich.

Aus der EP 0 289 116 A1 sind eine Vorrichtung und ein Verfahren zum Herstellen eines dreidimensionalen Objektes bekannt, bei denen das Objekt schichtweise durch Schmelzen eines Pulvermaterials hergestellt wird. Die übereinanderliegenden Pulverschichten werden mittels eines fluidisierten Pulverbetts erzeugt, indem das Pulver in dem Bauraum, in dem das Objekt gebildet wird, aufgewirbelt wird, so daß sich jeweils eine neue Schicht Pulver über eine bereits durch Schmelzen verfestigte Schicht legt. Dabei wird Luft von unten durch eine Diffusorplatte in den Bauraum geblasen, wodurch das Pulver aufwirbelt und gleichzeitig bereits verfestigte Stellen des Bauteils gekühlt werden.

Bei der Fluidisierung des Pulverbettes gemäß der EP 0 289 116 A1 ist eine Aufwirbelung und damit Verhinderung der Klumpenbildung unmittelbar vor dem Auftragungsvorgang einer Schicht möglich. Allerdings hat das beschriebene Verfahren Nachteile: Zum einen tritt die zur Verwirbelung verwendete Luft unmittelbar unter dem zu fertigenden Bauteil aus, wodurch das zu fertigende Bauteil das über diesem vorhandene Pulver abschatten kann und nur eine unvollständige Verwirbelung stattfindet. Zum anderen kann die Kühlung der gerade verfestigten Bereiche durch die zugeführte Luft zu Verspannungen und einem Verzug des Bauteils führen.

Dokument DE 198 137 42 offenbart einem Beschichter gemäß dem Oberbegriff des Anspruchs 1 und ein Verfahren gemäß dem Oberbegriff des Anspruchs 9.

Die Aufgabe der vorliegenden Erfindung ist es, eine Vorrichtung und ein Verfahren bereitzustellen, durch welche ein homogenerer Pülverauftrag in einem Verfahren zum Herstellen eines dreidimensionalen Objektes ermöglicht werden.

Die Aufgabe wird gelöst durch einen Beschichter nach Anspruch 1, eine Vorrichtung nach Anspruch 7 und ein Verfahren nach Anspruch 9. Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren.

Von den Figuren zeigen:
- Fig. 1: eine schematische Darstellung eines Ausführungsbeispiels einer Vorrichtung zum Herstellen eines dreidimensionalen Objektes;
- Fig. 2: eine schematische Querschnittsansicht eines Beschichters einer ersten Ausführungsform der Erfindung;
- Fig. 3: eine schematische Querschnittsansicht eines Beschichters gemäß einer zweiten Ausführungsform der Erfindung; und
- Fig. 4: eine schräge Draufsicht auf den Beschichter gemäß der zweiten Ausführungsform.

### Erste Ausführungsform

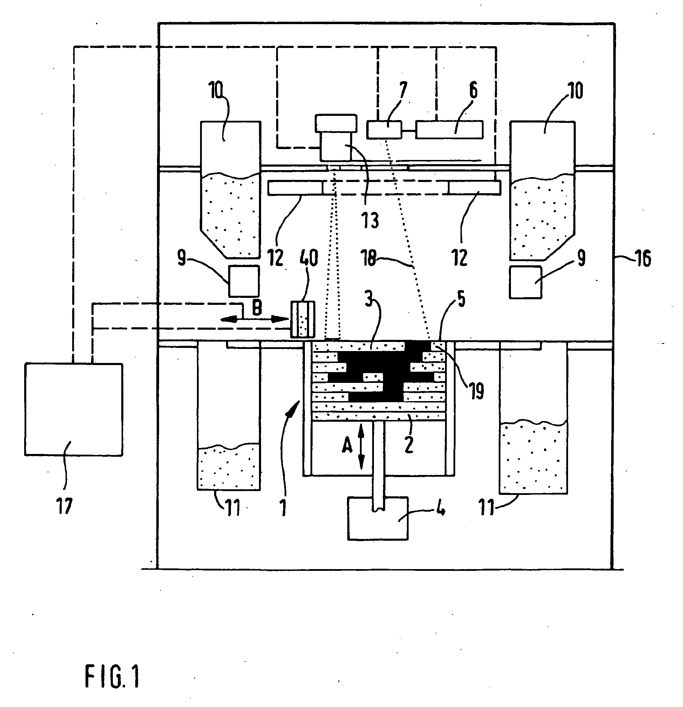

Fig. 1 zeigt eine Lasersintervorrichtung als Vorrichtung zur Herstellung eines dreidimensionalen Objektes gemäß der ersten Ausführungsform. Bei der Vorrichtung von Fig. 1 werden der erfindungsgemäße Beschichter und das erfindungsgemäße Verfahren verwendet. Der Bauvorgang findet in einem nach oben offenen Behälter 1 statt. In dem Behälter ist ein Träger 2 zum Tragen des zu bildenden dreidimensionalen Objekts 3 vorgesehen. Der Träger 2 ist mittels eines Antriebs 4 in dem Behälter 1 in vertikaler Richtung A auf und ab bewegbar. Der obere Rand des Behälters 1 definiert ein Baufeld 5. Oberhalb des Baufelds 5 ist eine Bestrahlungseinrichtung 6 in Form eines Lasers angeordnet, die einen gerichteten Laserstrahl 18 abgibt, der über eine Ablenkvorrichtung 7 auf das Baufeld 5 gelenkt wird. Ferner ist ein Beschichter 40 zum Aufbringen einer Schicht eines zu verfestigenden pulverförmigen Materials auf die Oberfläche des Trägers 2 oder eine zuletzt verfestigte Schicht vorgesehen. Der Beschichter 40 ist mittels eines durch die Pfeile B schematisch angedeuteten Antriebs über dem Baufeld 5 hin und her bewegbar. Durch zwei Dosierer 9 links und rechts vom Baufeld wird der Beschichter aus zwei Pulvervorratsbehältern 10 gespeist. Ferner sind links und rechts vom Baufeld zwei Überlaufbehälter 11 vorgesehen, die das beim Beschichten anfallende überschüssige Pulver aufnehmen können.

Es ist von Vorteil, wenn die Vorrichtung außerdem eine über dem Baufeld 5 angeordnete Heizeinrichtung 12 zum Heizen des Pulverbetts 19 und insbesondere zum Vorwärmen einer aufgetragenen aber noch nicht gesinterten (verfestigten) Pulverschicht auf eine für das Sintern geeignete Arbeitstemperatur T_{A} aufweist. Die Heizeinrichtung 12 ist beispielsweise in Form eines oder mehrerer Heizstrahler (beispielsweise Infrarotstrahler) ausgebildet. Sie ist so oberhalb des Baufelds 5 angeordnet, daß die aufgetragene Pulverschicht gleichmäßig erwärmt werden kann.

Es ist ebenfalls zweckmäßig, wenn in einem Abstand oberhalb des Baufelds 5 eine Temperaturmeßeinrichtung 13, beispielsweise ein Pyrometer oder eine IR-Kamera, vorgesehen ist, durch welche die Temperatur der zuletzt aufgetragenen Pulverschicht gemessen werden kann.

Abhängig von der Art des verwendeten Pulvers ist es von Vorteil, wenn eine Prozeßkammer 16 das Baufeld von der Umgebung abschließt. Dadurch kann der Bauvorgang unter Abschluß von Luft durchgeführt werden und eine Oxidation des Pulvers verhindert werden.

Zum Steuern und/oder Regeln der Bewegung B des Beschichters 40 dient eine Steuer- und/oder Regeleinrichtung 17. Diese steuert/regelt ebenfalls die Bewegung A des Trägers 2, die Leistung der Heizeinrichtung 12, die Leistung der Bestrahlungseinrichtung 6 und die Ablenkung durch die Ablenkeinrichtung 7. Hierzu ist die Steuer-/Regeleinrichtung 17 mit dem Antrieb des Beschichters 40, dem Antrieb 4, der Heizeinrichtung 12, der Temperaturmeßeinrichtung 13, der Ablenkeinrichtung 7 sowie der Bestrahlungseinrichtung 6 verbunden.

Im folgenden wird der Betrieb der Lasersintervorrichtung beschrieben:

Zunächst befindet sich der Beschichter 40 unterhalb des Dosierers 9 und wird aus dem Vorratsbehälter 10 mit der Menge an pulverförmigem Material für eine Schicht befüllt.

Danach wird durch Verfahren des Beschichters 40 parallel zur Oberfläche des Baufelds 5 eine Pulverschicht 25 auf den Träger 2 oder auf eine zuvor verfestigte Schicht 26 aufgebracht. Dabei fließt das pulverförmige Material 47 aus dem Beschichter nach.

Nach dem Aufbringen der Schicht 25 des pulverförmigen Materials 47 erfolgt die Verfestigung an den Stellen der Schicht 25, die dem Querschnitt des Objekts entsprechen, indem die Schicht mit dem Laserstrahl 18 in an sich bekannter Weise belichtet wird.

Entscheidend für die Qualität des fertigen Objekts ist insbesondere, daß die Temperatur der zu verfestigenden obersten Pulverschicht eine Temperatur in einem bestimmten Prozeßfenster hat. Bei Temperaturen oberhalb des Prozeßfensters wird das Pulver schon ohne zusätzliche Strahlungsenergie gesintert, während sich bei Temperaturen unterhalb des Prozeßfensters Verspannungen in der verfestigten Schicht ausbilden können. Vielfach wird auch der sogenannte Curl-Effekt, bei dem sich die Ränder der verfestigten Schicht aufbiegen bzw. aufrollen, auf eine zu geringe Temperatur der obersten Pulverschicht zurückgeführt. Die mit dem Beschichter aufgebrachte Pulverschicht 25 muß daher zum Erreichen guter Ergebnisse mit der Heizeinrichtung 12 vor dem Verfestigen auf eine Arbeitstemperatur T_{A} innerhalb des Prozeßfensters erwärmt und dann während des Verfestigens in dem Prozeßfenster gehalten werden.

Hierzu wird nach dem Aufbringen der Pulverschicht die Temperatur dieser Schicht mit der Temperaturmeßeinrichtung 13 gemessen. In Abhängigkeit von der dabei gemessenen Temperatur wird die Heizleistung der Heizeinrichtung 12 bestimmt. Ist die oberste Pulverschicht auf die Arbeitstemperatur T_{A} erwärmt, so werden die dem Querschnitt des Objekts entsprechenden Stellen in der Schicht des Aufbaumaterials durch Bestrahlen mit dem Laser 6 verfestigt.

Nach dem Verfestigen einer Schicht wird der Träger 2 um eine der Schichtdicke d entsprechende Strecke abgesenkt und die zuvor beschriebenen Schritte werden wiederholt bis die Herstellung des dreidimensionalen Objekts 3 abgeschlossen ist.

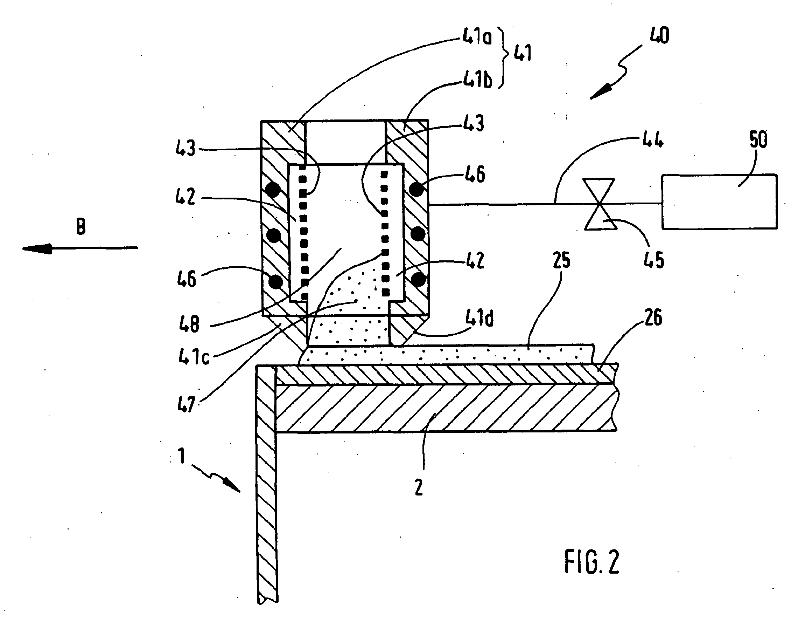

Fig. 2 zeigt eine erste Ausführungsform des in der erfindungsgemäßen Vorrichtung zur Herstellung eines dreidimensionalen Objekts verwendeten Beschichters 40, der dem Auftragen von Schichten des pulverförmigen Materials dient.

Der Beschichter weist eine erste längsseitige Wand 41a und eine zweite längsseitige Wand 41b auf, die über nicht gezeigte Seitenwände starr miteinander verbunden sind. Als Längsseiten werden dabei jene Seiten des Beschichters angesehen, welche im wesentlichen quer zur Bewegungsrichtung (durch den Pfeil B in Fig. 1 angedeutet) liegen. Zweckmäßigerweise sind die erste längsseitige Wand 41a und die zweite längsseitige Wand 41b parallel zueinander, jedoch ist dies nicht zwingend notwendig. Am unteren Ende der ersten längsseitigen Wand 41a ist eine Abziehklinge 41c angebracht und am unteren Ende der zweiten längsseitigen Wand 41b ist eine Abziehklinge 41d angebracht. Die Klingen 41c und 41d dienen zum Glattstreichen der aufzutragenden Pulverschicht. Sie sind, ebenso wie die Wände, bevorzugt aus einem starren Material, insbesondere aus Metall, einem hitzebeständigen Kunststoff oder einer Keramik ausgebildet. Die erste längsseitige Wand 41a, die zweite längsseitige Wand 41b und die nicht dargestellten beiden Seitenwände bilden zusammen eine nach oben und unten offene Vorratskammer 48, die der Aufnahme des pulverförmigen Materials für eine Schicht dient. In die erste längseitige Wand 41a und die zweite längsseitige Wand 41b ist jeweils eine Fluidisierungseinrichtung integriert, die aus einer Vorkammer 42 und einer Fluidisierungswand 43 besteht. Zum Einlassen eines fluiden Mediums, beispielsweise Stickstoffgas, in die Vorkammern 42 ist eine Zuleitung 44 mit einem Ventil 45 vorgesehen. Das Fluidisierungswand 43 besitzt viele kleine Öffnungen, deren Durchmesser kleiner als der Durchmesser der Teilchen des pulverförmigen Materials ist, so daß das Stickstoffgas durch das Fluidisierungswand 43 aus der Vorkammer 42 austreten kann, jedoch kein pulverförmiges Material 47 in die Vorkammer 42 gelangen kann.

Die Fluidisierungswand 43 kann ein Metallblech sein mit Öffnungen darin. Denkbar ist auch eine Ausbildung der Fluidisierungswand 43 aus einem gewalzten Drahtgewebe oder gesinterten Kunststoffmaterial. Ferner kann die Fluidisierungswand 43 auch aus einem gasdurchlässigen Verbundwerkstoffmaterial bestehen, bei dem Metall- oder Keramikteilchen mittels eines Binders, z.B. ein Polymer, zusammengehalten werden.

Im Betrieb wird durch Öffnen des Ventils 45 und Einlassen von Stickstoffgas in die Vorkammern 42 über die Zuleitung 44 in diesen Vorkammern 42 ein Überdruck erzeugt, der zum Austreten von Stickstoff aus den Öffnungen in den Fluidisierungswänden 43 führt. Durch das Fluidisieren des Pulvers läßt sich das Fließverhalten des Pulvers und damit die Qualität der aufgetragenen Schicht verbessern.

Von besonderem Vorteil ist, wenn eine Einrichtung 50 zum Steuern und/oder Regeln des Drucks und/oder Volumenstroms des fluiden Mediums vorhanden ist.

Ein Grund hierfür ist der, dass eine Fluidisierung des Pulvers nicht erforderlich ist, wenn der Beschichter sich nicht über dem Baufeld 5 befindet. Der Zustrom des fluiden Mediums bzw. Gases kann dann durch die Steuer-/Regeleinrichtung in Abhängigkeit von der Position des Beschichters eingestellt werden.

Desweiteren sind für eine möglichst vollständige Homogenisierung und Vermischung des Pulvers im Beschichter ein hoher Druck und Volumenstrom von Vorteil. Insbesondere mit einer abnehmenden Pulvermenge im Beschichter kann es jedoch von Vorteil sein, wenn Druck und Volumenstrom reduziert werden, um einen geordneten Austrag des Pulvers aus dem Beschichter zu gewährleisten.

Zur Einstellung des Gasstroms zum Beschichter kann die Steuer-/Regeleinrichtung entweder auf das Ventil 45 direkt zugreifen, oder aber den Gasfluß zu dem Ventil 45 begrenzen.

Eine Überwachung des Füllstandes im Beschichter kann mittels eines Füllstandssensors im Beschichter geschehen, der eine entsprechende Füllstandsinformation der Regeleinrichtung 50 übermittelt.

Natürlich kann die Regelung auch in Abhängigkeit von anderen Parametern, wie z.B. der Temperatur, erfolgen. Insbesondere ist es zur Verbesserung der Pulverhomogenität nicht notwendig, das für die Fluidisierung verwendete fluide Medium auf eine höhere Temperatur als jene des zu fluidisierenden Pulvers zu bringen.

Allerdings hat eine Vorwärmung des Pulvers vor dem Auftrag den Vorteil, daß die Bauzeit zur Herstellung des dreidimensionalen Objektes wesentlich verkürzt werden kann, da die Aufheizzeit für die neu aufgetragene Schicht vermieden oder zumindest wesentlich verringert werden kann. Weiterhin ermöglicht es eine Pulvervorwärmung vor dem Auftrag, eine gleichmäßige Erwärmung der aufzutragenden Pulverschicht zu erreichen. Würde lediglich die Heizeinrichtung 12 zur Erwärmung der aufgetragenen Pulverschicht verwendet, so würde die beispielsweise mittels einer Strahlungsheizung eingebrachte Strahlung teilweise reflektiert, so daß sich in der aufgetragenen Pulverschicht ein Temperaturgradient einstellen könnte und die Gefahr der oberflächlichen Überhitzung bestünde. Desweiteren müßten unter allen Umständen Hindernisse zwischen der Strahlungsheizung und der Pulverschicht für eine gleichmäßige Erwärmung vermieden werden. Schließlich können durch eine Vorerwärmung des Pulvers große Temperaturunterschiede zwischen aufgetragener Pulverschicht und dem schon vorhandenen Pulverbett vermieden werden und dadurch unerwünschte thermische Effekte vermieden werden und das Prozeßfenster vergrößert werden.

Aufgrund der eben genannten Vorteile kann der erfindungsgemäße Beschichter mit einer Einrichtung zum Vorwärmen des Pulvers in dem Beschichter versehen sein. Hierzu kann beispielsweise in den Beschichter eine Heizeinrichtung 46, beispielsweise als Widerstandsheizung, integriert sein. Darüber hinaus ist auch jede andere Heizeinrichtung denkbar mit der die Teile des Beschichters, die mit dem pulverförmigen Material in Kontakt kommen, beheizt werden können. Beispielsweise kann der Beschichter selektiv durch eine Strahlungsheizung beheizt werden oder mittels Wärmemitteln, die durch die Wände des Beschichters strömen.

### Zweite Ausführungsform

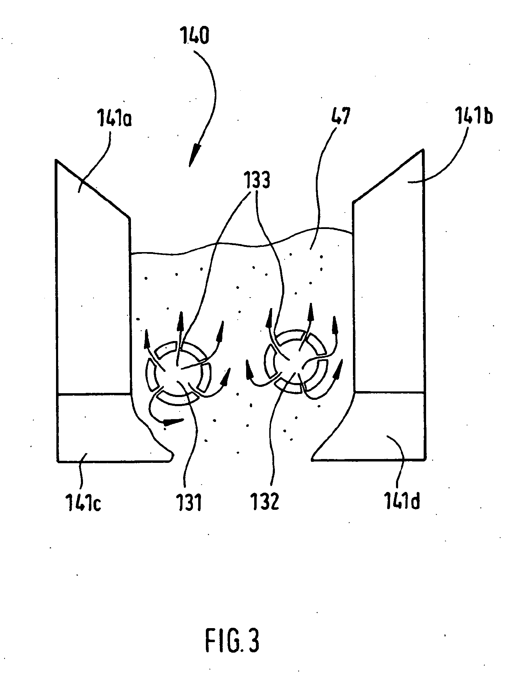

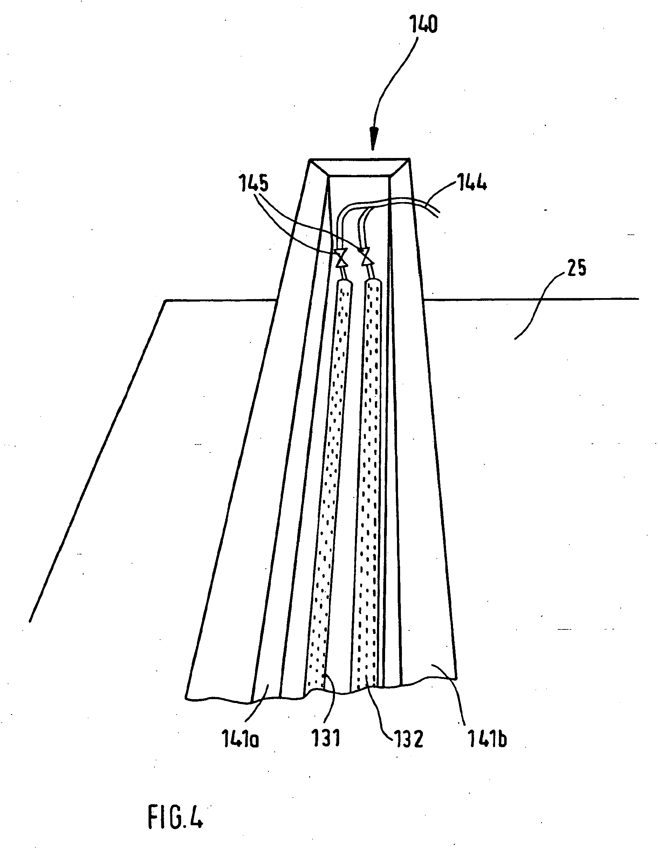

Fig. 3 und 4 zeigen eine Querschnittsansicht bzw. eine Draufsicht von schräg oben auf einen Beschichter gemäß einer zweiten Ausführungsform.

Bei dem Beschichter gemäß der zweiten Ausführungsform wird das fluide Medium zur Pulverfluidisierung nicht über Vorkammern 42 in den Beschichterwandungen zugeführt. Stattdessen sind in der unteren Hälfte des Beschichters zwischen der ersten längsseitigen Wand 141a und der zweiten längsseitigen Wand 141b parallel zu denselben zwei Röhren 131, 132 vorhanden. Die Wandungen der Röhren 131, 132 sind mit Öffnungen 133 versehen, welche so bemessen sind, daß ihr Durchmesser so klein ist, daß keine Pulverteilchen in die Röhren eindringen können. Das fluide Medium wird den Röhren 131, 132 an einem stirnseitigen Ende derselben über Zufuhrleitungen 144 zugeführt. Wie auch bei der ersten Ausführungsform ist in jeder der Zufuhrleitungen 144 ein Ventil 145 vorgesehen. Weitere, nicht beschriebene Details sind identisch zu der Ausführungsform 1. Insbesondere gilt dies auch für mögliche Abwandlungen des Beschichters, beispielsweise das Vorsehen einer Steuer-/Regeleinrichtung für den Druck und/oder Volumenstrom des fluiden Mediums. Ferner können die Wandungen der Röhren 131, 132 aus demselben Material bestehen wie die Fluidisierungswand 43 bei der ersten Ausführungsform.

Bei dem Beschichter gemäß der zweiten Ausführungsform sind die Vorrichtungen für die Zufuhr des fluiden Mediums 131, 132 im unteren Bereich des Beschichters angeordnet. Da das Pulver aufgrund der Schwerkraft nach unten fällt, ist durch diese Anordnung eine bessere Durchmischung möglich. Da Pulverteilchen vor dem Austrag aus dem Beschichter an den Röhren 131, 132 vorbei kommen, ist eine bessere Erfassung des gesamten Pulvervorrats durch die Fluidisiereinrichtung möglich. Im Gegensatz zur Ausführungsform 1, wo im oberen Bereich der Vorkammern 42 mit fortschreitender Austragung des Pulvers das ausströmende fluide Medium nicht mehr auf Pulver trifft, ist bei der zweiten Ausführungsform stets ein Auftreffen des Mediums auf Pulverteilchen gewährleistet, da die Röhren im unteren Bereich des Beschichters angeordnet sind.

Durch die günstige Anordnungsmöglichkeit der Ausströmöffnungen 133 für das fluide Medium ist es möglich, die Menge des verwendeten fluiden Mediums zu reduzieren, da eine effizientere Verwendung des fluiden Mediums stattfindet.

Insbesondere müssen die Öffnungen 133 nicht gleichmäßig über die Wand der Röhren 131, 132 verteilt sein. Beispielsweise können die Öffnungen 133 lediglich in der oberen Hälfte der Röhren, also auf der der Pulverbettschicht 25 abgewandten Seite der Röhren angeordnet sein.

Desweiteren ist es natürlich möglich, anstelle der Röhrenform eine beliebige andere Form zu wählen. Die einzige Randbedingung ist die, daß es sich um einen Hohlkörper handeln muß, durch den das fluide Medium strömen kann und der Austrittsöffnungen für das fluide Medium in seiner Wandung aufweist. Beispielsweise kann eine Mehrzahl solcher Hohlkörper mit gleichen Abständen quer zur Verfahrrichtung B des Beschichters vorgesehen werden.

### Weitere Abwandlungen

Die Erfindung wurde für eine Lasersintervorrichtung beschrieben, bei der als Strahlungsquelle ein Laser verwendet wurde. Jede andere Strahlungsquelle, mit der elektromagnetische oder Teilchenstrahlung in das pulverförmige Aufbaumaterial eingebracht werden kann, ist möglich. So kann z.B. eine Strahlungsquelle für inkohärente Lichtstrahlung, für IR-Strahlung, für Röntgenstrahlung oder für Elektronenstrahlen verwendet werden. Dementsprechend ist ein pulverförmiges Aufbaumaterial zu verwenden, das mit der jeweiligen Strahlung verfestigt werden kann.

Bei den beschriebenen Vorrichtungen wird als Heizeinrichtung 12 für das Vorwärmen einer bereits aufgetragenen Schicht ein Infrarotstrahler oberhalb des Baufeldes vorgeschlagen. Andere Möglichkeiten, eine zuletzt aufgetragene Schicht des Baumaterials zu erwärmen, sind denkbar. Beispielsweise kann die Zirkulation von warmer Luft oder Stickstoff zum Vorwärmen der aufgetragenen Schicht verwendet werden, wobei die warme Luft oder der warme Stickstoff über die frisch aufgetragene Schicht geleitet wird.

Der Beschichter wurde jeweils mit einer Vorratskammer beschrieben. Es ist jedoch auch möglich, die Vorratskammer in mehrere Kammern aufzuteilen und dadurch einen ortsaufgelösten Beschichter zu realisieren. Dabei können die verschiedenen Kammern getrennt mit unterschiedlichen pulverförmigen Materialien beschickt werden.

Das zugeführte fluide Medium ist nicht auf ein Gas, wie z.B. Druckluft oder Stickstoff, beschränkt. Beispielsweise kann mittels der Fluidisierung das Pulver in dem Beschichter befeuchtet werden oder einer chemischen Behandlung unterzogen werden.

Obwohl in der Beschreibung eine Vorrichtung zum Herstellen eines dreidimensionalen Objektes dargestellt wurde, bei der eine Fluidisierung des pulverförmigen Baumaterials in dem Beschichter stattfindet, ist es natürlich auch möglich, zusätzlich an anderen Stellen in der Vorrichtung das Pulver zu fluidisieren, wie z.B. in dem Vorratsbehälter oder dem Dosierer.

Obwohl in der obigen Beschreibung Möglichkeiten dargestellt wurden, das Pulver in dem Beschichter vorzuerwärmen, ist natürlich auch eine Vorerwärmung an anderen Stellen, beispielsweise in einem Vorratsbehälter oder dem Dosierer möglich.

## Patentansprüche

1. Beschichter geeignet zum Auftragen von pulverförmigen Schichten in einer Vorrichtung zum Herstellen eines dreidimensionalen Objekts durch Verfestigen von Schichten eines pulverförmigen Materials an den dem jeweiligen Querschnitt des Objekts entsprechenden Stellen mit:
einer ersten längsseitigen Wand (41a, 141a) und einer zweiten längsseitigen Wand (41b, 141b), die über Seitenwände miteinander verbunden sind, **gekennzeichnet durch**
eine Einrichtung (42, 43, 44, 45, 131, 132, 133, 144, 145) zum Fluidisieren des pulverförmigen Materials mit einem dem Beschichter zugeführten Gas,
eine Zuleitung (44, 144) mit einem Ventil (45, 145) zum Zuführen des Gases, und
eine Einrichtung (50) zum Steuern und/oder Regeln des Drucks und/oder Volumenstroms des Gases.

2. Beschichter nach Anspruch 1, bei dem die Einrichtung zum Fluidisieren des pulverförmigen Materials mindestens einen von dem Gas durchströmten Hohlkörper mit Gasaustrittsöffnungen (133) in der Hohlkörperwandung aufweist.

3. Beschichter nach Anspruch 2, bei dem der Hohlkörper eine Röhrenform aufweist.

4. Beschichter nach Anspruch 2 oder 3, bei dem der Hohlkörper nahe der Unterkante der ersten längsseitigen Wand (141a) oder der zweiten längsseitigen Wand (141b) angeordnet ist.

5. Beschichter nach Anspruch 3 oder 4, bei dem im Beschichter zwei parallele Röhren (131, 132) als Hohlkörper angeordnet sind.

6. Beschichter nach einem der Ansprüche 1 bis 5, weiter mit einer Regeleinrichtung (17), mit der die Temperatur des Beschichters (40) geregelt werden kann.

7. Vorrichtung zum Herstellen eines dreidimensionalen Objekts durch Verfestigen von Schichten eines pulverförmigen Materials an den dem jeweiligen Querschnitt des Objekts entsprechenden Stellen mit
einem über einem Baufeld (5) verfahrbaren Beschichter (40) nach einem der Ansprüche 1 bis 6.

8. Vorrichtung nach Anspruch 7, bei der die Verfestigung mittels elektromagnetischer Strahlung oder Teilchenstrahlung erfolgt.

9. Verfahren zum Herstellen eines dreidimensionalen Objekts mit den Schritten:
(a) Auftragen einer Schicht (25) eines pulverförmigen Materials (47) auf die Oberfläche eines Baufelds mit einem Beschichter (40);
(b) Verfestigen der Schicht (25) an den dem Querschnitt des Objekts (3) entsprechenden Stellen;
(c) Wiederholen der Schritte (a) und (b) bis das dreidimensionale Objekt (3) hergestellt ist,
**dadurch gekennzeichnet, dass** das pulverförmige Material in Schritt (a) in dem Beschichter (40) mittels eines zugeführten Gases fluidisiert wird, wobei der Druck und/oder Volumenstrom des Gases basierend auf der Position des Beschichters oder der Pulvermenge im Beschichter oder der Temperatur geregelt werden.

10. Verfahren nach Anspruch 9, wobei ein Beschichter nach einem der Ansprüche 1 bis 6 verwendet wird.

11. Verfahren nach Anspruch 9 oder 10, bei dem die Verfertigung mittels Zuführens von elektromagnetischer Strahlung oder Teilchenstrahlung erfolgt.

## Claims

1. Recoater suitable for applying powder layers in a device for manufacturing a three-dimensional object by solidification of layers of a powder material at those positions corresponding to the respective cross-sections of the object, having:
a first longitudinal wall (41a, 141a) and a second longitudinal wall (41b, 141b) that are connected to one another via sidewalls, **characterized by** a device (42, 43, 44, 45, 46, 131, 132, 144, 145) for fluidizing the powder material by means of a gas that is fed to the application device, a supply line (44,144) with a valve (45, 145) for supplying the gas and a device (50) for controlling and / or regulation of the pressure and / or the flow volume of the gas.

2. Recoater according to claim 1, in which the device for fluidizing the powder material has at least one hollow body having gas escape openings (133) in the walls of the hollow body, wherein the gas flows through the hollow body.

3. Recoater according to claim 2, in which the hollow body has a pipe shape.

4. Recoater according to claim 2 or 3, in which the hollow body is arranged close to the lower edge of the first longitudinal wall (141a) or of the second longitudinal wall (141b).

5. Recoater according to claim 3 or 4, in which two parallel pipes (131, 132) are arranged as hollow bodies in the recoater.

6. Recoater according to one of claims 1 to 5, further having a closed loop control device (17), by which the temperature of the recoater (40) can be controlled.

7. Device for manufacturing a three-dimensional object by solidifying layers of a powder material at those positions corresponding to the respective cross - section of the object having a recoater (40) according to one of claims 1 to 6 that can be moved over a building area (5).

8. Device according to claim 7, in which the solidification is effected by means of electromagnetic radiation or particle radiation.

9. Method of manufacturing a three-dimensional object having the steps:
(a) applying a layer (25) of a material in powder form (47) onto the surface of a building area by means of an application device (40);
(b) solidifying the layer (25) at those positions corresponding to the cross - section of the object (3);
(c) repeating steps (a) and (b) until the three dimensional object (3) has been manufactured,
**characterized in that**
in step (a) the material in powder form is fluidized in the recoater (40) by means of a supplied gas, wherein the pressure and/or flow rate of the gas are controlled based on the position of the recoater or the amount of powder in the recoater or the temperature.

10. Method according to claim 9, wherein an recoater according to one of claims 1 to 6 is used.

11. Method according to claim 9 or 10, in which the solidification is effected by applying electromagnetic radiation or particle radiation.

## Revendications

1. Regarnisseuse approprié pour l'application de couches de poudre dans un dispositif de fabrication d'un objet tridimensionnel par solidification de couches d'un matériau en poudre à des positions correspondant à celles des cross sections respectives de l'objet, comportant:
une première paroi longitudinale (41a, 141a) et une seconde paroi longitudinale (41b, 141b) qui sont reliées entre elles par des parois latérales, **caractérisé par** un dispositif (42, 43, 44, 45, 46, 131, 132, 144, 145) pour fluidiser le matériau pulvérulent au moyen d'un gaz qui est introduit dans le dispositif d'application, une ligne d'alimentation (44, 144) avec une valve (45, 145) pour fournir le gaz et un dispositif (50) pour la commande et / ou régulation de la pression et / ou le volume d'écoulement du gaz.

2. Regarnisseuse selon la revendication 1, dans lequel le dispositif de fluidisation de la poudre de matériau a au moins un corps creux ayant des ouvertures d'échappement de gaz (133) dans les parois du corps creux, dans lequel le gaz s'écoule à travers le corps creux.

3. Regarnisseuse selon la revendication 2, dans lequel le corps creux a une forme de tuyau.

4. Regarnisseuse selon la revendication 2 ou 3, dans lequel le corps creux est disposé à proximité du bord inférieur de la première paroi longitudinale (141a) ou de la seconde paroi longitudinale (141b).

5. Regarnisseuse selon la revendication 3 ou 4, dans lequel deux tubes parallèles (131, 132) sont disposées comme corps creux dans l'enducteur.

6. Regarnisseuse selon l'une quelconque des revendications 1 à 5, comportant en outre un dispositif de commande en boucle fermée (17), par lequel la température de l'enducteur (40) peut être contrôlée.

7. Dispositif de fabrication d'un objet tridimensionnel par solidification de couches d'un matériau pulvérulent à ces positions correspondant à la cross section respective de l'objet ayant une regarnisseuse (40) selon l'une quelconque des revendications 1 à 6 qui peut être déplacé sur une zone de construction (5).

8. Dispositif selon la revendication 7, dans lequel la solidification est effectuée au moyen d'un rayonnement électromagnétique ou un rayonnement corpusculaire.

9. Procédé de fabrication d'un objet tridimensionnel comportant les étapes consistant à:
(a) appliquer une couche (25) d'un matériau sous forme de poudre (47) sur la surface d'une zone de construction au moyen d'un dispositif d'application (40);
(b) solidification de la couche (25) à ces positions correspondant à la cross - section de l'objet (3);
(c) répéter les étapes (a) et (b) jusqu'à ce que l'objet tridimensionnel (3) a été fabriqué,
**caractérisé en ce que**
dans l'étape (a) le matériau sous forme de poudre est fluidisée dans le regarnisseuse (40) au moyen d'un gaz fourni, dans lequel la pression et / ou le débit du gaz sont contrôlées sur la base de la position de l'enducteur ou la quantité de poudre dans l'enducteur ou la température.

10. Procédé selon la revendication 9, dans lequel un regarnisseuse selon l'une quelconque des revendications 1 à 6 est utilisé.

11. Procédé selon la revendication 9 ou 10, dans lequel la solidification est effectuée par application d'un rayonnement électromagnétique ou un rayonnement corpusculaire.
